Europäisches Patentamt

European Patent Office

Office européen des brevets

(11) Publication number: **0 467 343 A2**

# EUROPEAN PATENT APPLICATION

(21) Application number: **91111969.1**

(22) Date of filing: **17.07.91**

(51) Int. Cl.5: **G01J 9/02**, G01B 9/02

(30) Priority: **18.07.90 JP 189796/90**

(43) Date of publication of application:
**22.01.92 Bulletin 92/04**

(84) Designated Contracting States:
**DE FR GB**

(71) Applicant: **CANON KABUSHIKI KAISHA**
**30-2, 3-chome, Shimomaruko, Ohta-ku**
**Tokyo(JP)**

(72) Inventor: **Ohtsuka, Masaru, c/o Canon**
**Kabushiki Kaisha**
**30-2, 3-chome, Shimomaruko**
**Ohta-ku, Tokyo(JP)**
Inventor: **Haya, Satoshi, c/o Canon Kabushiki**
**Kaisha**
**30-2, 3-chome, Shimomaruko**
**Ohta-ku, Tokyo(JP)**
Inventor: **Nishimoto, Yoshifumi, c/o Canon**
**Kabushiki Kaisha**
**30-2, 3-chome, Shimomaruko**
**Ohta-ku, Tokyo(JP)**

(74) Representative: **Tiedtke, Harro, Dipl.-Ing. et al**
**Patentanwälte Tiedtke-Bühling- Kinne &**
**Partner Bavariaring 4 POB 20 24 03**
**W-8000 München 2(DE)**

(54) **Optical heterodyne interferometer.**

(57) An optical heterodyne interferometer generates first and second different frequency light beams. The first light beam after irradiating an object to be measured is combinde with the second light beam used as a reference to from a heterodyne signal. A first detector detects heterodyne signals from at least three points not in a straight line within a region of the object to be measured. A second detector detects heterodyne signals at respective points within the measuring region. Optical phase changes of the light beams due to the object to be measured are detected according to the signals obtained from the first and second detectors.

FIG. 2

## BACKGROUND OF THE INVENTION

### 1. Field of the Invention

This invention relates to a measuring apparatus, and more particularly, for example, to an optical heterodyne interferometer which detects the three-dimensional shape of an object to be measured by detecting optical phase changes of incident light waves in accordance with the shape of the object to be measured.

An optical heterodyne interferometer has been known as an apparatus which can detect the shape of an optical member, such as a lens, a mirror or the like, utilizing interference of optical waves. Such an apparatus is described, for example, in Applied Optics, Vol. 19, No. 1 (1980), pp. 154 - 160.

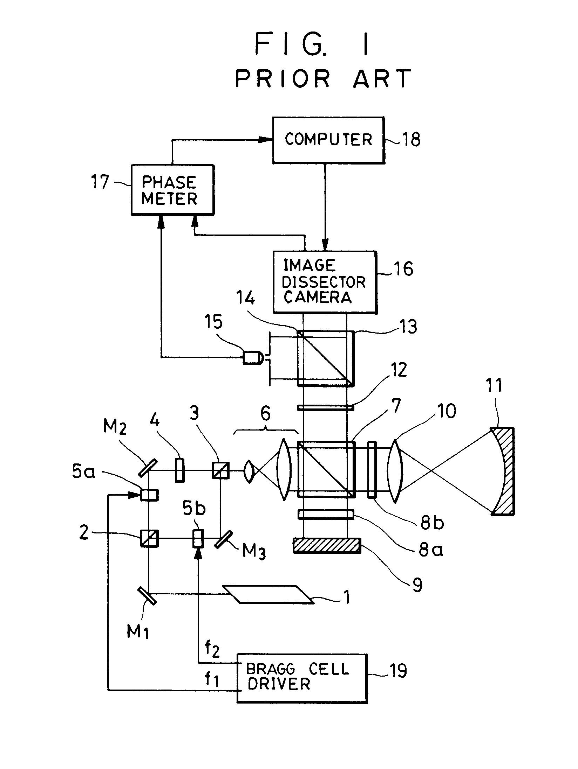

FIG. 1 is a schematic diagram of the principal part of an optical system of a conventional optical heterodyne interferometer.

In FIG. 1, a light wave emitted from a laser 1 is reflected by a mirror M1, and is divided into reflected light and transmitted light by a beam splitter 2. The transmitted light (the first light wave) passing a Bragg cell 5a, a mirror M2 and a λ/2 plate 4, and the reflected light (the second light wave) passing a Bragg cell 5b and a mirror M3 are combined by a beam splitter 3.

At that time, the frequency of the first light wave passing through the Bragg cell 5a is shifted by a frequency f1, and the plane of the polarization of the first light wave passing through the λ/2 plate 4 is rotated by 90 degrees. The frequency of the second light wave passsing through the Bragg cell 5b is shifted by a frequency f2.

After combined by the beam splitter 3, the diameter of the combined light beam is expanded by a beam expander 6, and is incident upon a polarizing beam splitter 7. The first light wave having the frequency f1 passes through the polarizing beam splitter 7, is made to be a circularly polarized light beam by the λ/2 plate 8b, and is incident upon an object 11 to be measured via a collimating lens 10. A wavefront to be measured reflected by the object 11 to be measured is returned to the original optical path. At that time, the direction of polarization (the plane of polarization) of the returned light wave after passing through the λ/4 plate 8b is displaced by 90 degrees from the direction of polarization when the light wave was first incident. Hence, the returned light wave is reflected by the polarizing beam splitter 7.

On the other hand, the second light wave having the frequency f2 is reflected by the polarizing beam splitter 7, is made to be a circularly polarized light beam by a λ/4 plate 8a. A reference wave front reflected by a reference plane mirror 9 becomes a circularly polarized light rotating in the reverse direction, and is returned to the original optical path. The returned light wave passes through the λ/4 plate 8a, where the light wave becomes a linearly polarized light having a direction of polarization (a plane of polarization) displaced by 90 degrees from the direction of polarization when the light wave was first incident. Hence, the returned light wave passes through the polarizing beam splitter 7, and is combined (synthesized) with the above-described wavefront to be measured.

The combined two light waves, i.e., the wavefront to be measured and the reference wavefront, are made to be coherent wave fronts by a polarizer 12 so as to interfere with each other.

A light wave as a result of interference is detected as a heterodyne signal having a frequency shift difference of f1 - f2 by a photodetector 15 and an image dissector camera 16.

The image dissector camera 16 selects an arbitrary point of a two-dimensional image by a command from a computer 18, and can detect an intensity signal of light incident upon that point in real time.

The phase distribution of the heterodyne signal f1 - f2 in the present embodiment directly represents an error in the shape of the object 11 to be measured obtained from a spherical wave formed by the collimating lens 10, if the reference plane mirror 9 is assumed to have an deal plane.

The phase difference $\phi$ between a reference signal R and a measuring signal S is detected by a phase meter 17, where the reference signal R represents a heterodyne signal obtained from the photodetector 15, and the measuring signal S represents each signal from the image dissector camera 16. Respective measured points by the image dissector camera 16 are two-dimensionally scanned by a command from the computer 18 to obtain the two-dimensional distribution of the phase difference $\phi$ between the measuring signal S and the reference signal R at respective points of measurement. A wavefront aberration due to the shape of the object 11 to be measured is thereby detected. If the phase resolution of an electrical signal is assumed to be $0.1^\circ$, and the oscillation wavelength of the laser $\lambda$ = 632.8 nm, it is possible to measure the wavefront aberration with a resolution of

$$\lambda/2 \times (0.1^\circ/360^\circ) = 0.09 \text{ nm}.$$

In the optical heterodyne interferometer shown in FIG. 1, a time of about 0.1 second to a few seconds is needed in most cases until a surface to be measured is two-dimensionally scanned by the image dissector camera 16, and the detection of optical signals at all points is completed. Accordingly, if, for example, the object 11 to be measured, the reference plane mirror 9 or the like vibrates or tilts during measurement, a component due to tilt around a point where a reference signal is detected or an amplitude caused by vibration is detected as a measurement error, reducing accuracy in measurement.

## SUMMARY OF THE INVENTION

It is an object of the present invention to provide a measuring apparatus which can remove the influence of measurment error factors due to mechanical vibration and the like occurring during two-dimensional scanning by a scanning detection means, such as an image dissector camera or the like, and which can detect the shape of an object to be measured with high accuracy.

The invention is directed to measuring apparatus in which light irradiates a portion of an object to be measured. A reference light interferes with the light from respective points of the irradiated portion and interference information of the light from the respective points is detected. Tilt variation information of the portion being measured is detected during the interference information detection and wavefront aberration information of the light from the portion being measured is detected according to the result of the interference information detection and the tilt variation detection.

The foregoing and other objects and features of the present invention will become more apparent from the following detailed description of the preferred embodiments taken in connection with the accompanying drawings.

## BRIEF DESCRIPTION OF THE DRAWINGS

FIG. 1 is a schematic diagram of a conventional heterodyne interferometer;
FIG. 2 is a schematic diagram of the principal part of an optical system according to a first embodiment of the present invention;
FIGS. 3(A) and 3(B) are enlarged views illustrating part of FIG. 2;
FIGS. 4(A) and 4(B) illustrate output signals from a phase meter shown in FIG. 2;
FIG. 5 is a schematic diagram of the principal part of an optical system according to a second embodiment of the present invention; and
FIG. 6 is a schematic diagram of the principal part of an optical system according to a third embodiment of the present invention.

## DETAILED DESCRIPTION OF THE PREFERRED EMBODIMENTS

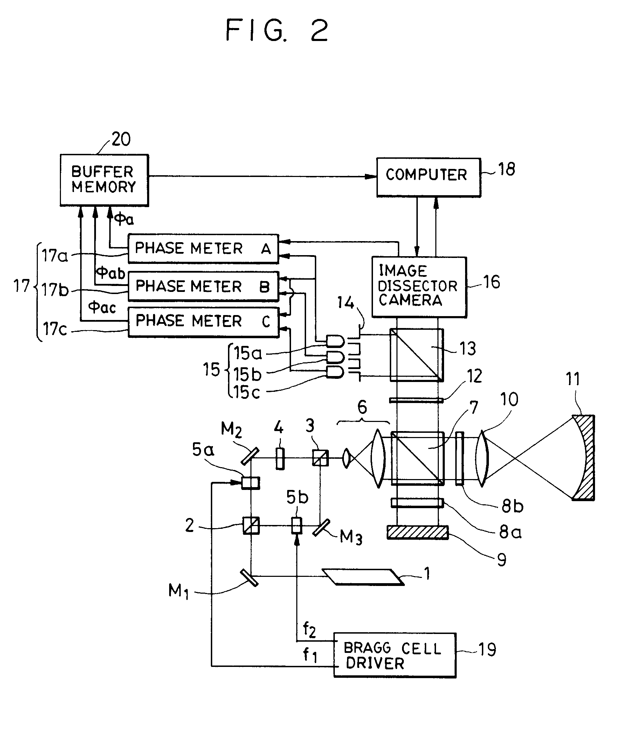

FIG. 2 is a schematic diagram of the principal part of an optical system according to a first embodiment of the present invention. The apparatus of the present embodiment differs from the conventional optical heterodyne interferometer shown in FIG. 1 particularly in that a heterodyne signal reflected by the beam splitter 13 is detected by three photodetectors which are not disposed on a straight line but are disposed at respective points on a plane, and the shape of the object 11 to be measured is detected utilizing output signals from the three photodetectors.

Although partly overlapped with the explanation provided with reference to FIG. 1, features of the configuration of the present embodiment will now be explained.

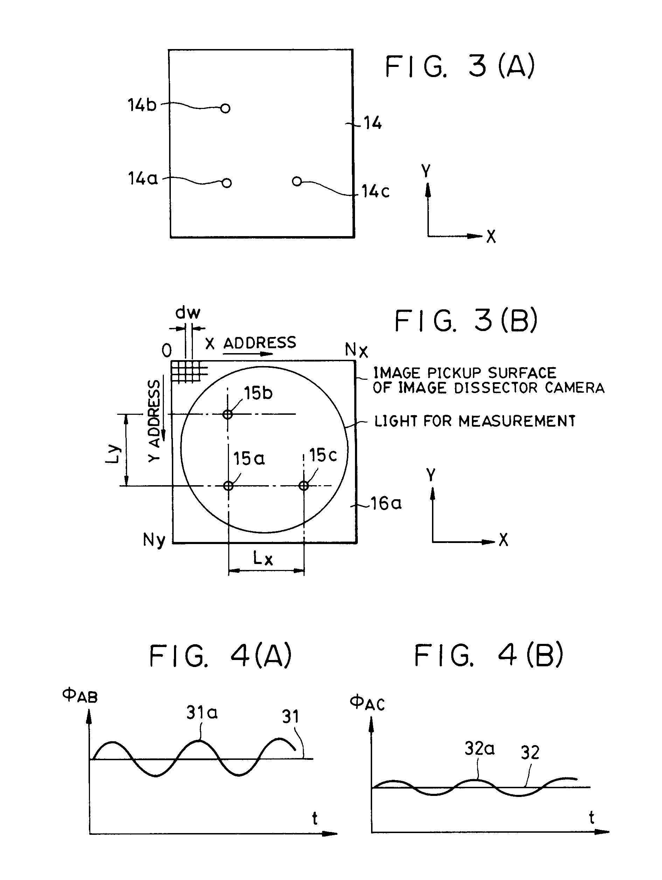

In FIG. 2, a light source 1 comprises a laser emitting a coherent light beam. A beam splitter 2 divides the light beam from the laser 1 into two, i.e., reflected and transmitted, light beams. Each of Bragg cells 5a and 5b provides a frequency shift for an incident light beam using a acousto-optical effect. In the present embodiment, a light wave subjected to the frequency shift of a frequency f1 is issued from the Bragg cell 5a, and a light wave subjected to the frequency shift of a frequency f2 is issued from the Bragg cell 5b. A $\lambda/2$ plate 4 rotates the plane of polarization of an incident light beam by 90 degrees. A beam splitter 3 combines the light wave having the frequency f1 from the Bragg cell 5a and the light beam having the frequency f2 from the Bragg cell 5b. A beam expander 6 expands the diameter of an incident light beam and issues the expanded light beam. A polarizing beam splitter 7 reflects or transmits an incident light beam in accordance with the polarization state of the incident light beam to change the moving direction of the light beam. Each of $\lambda/4$ plates 8a and 8b converts a linearly polarized light beam into a circularly polarized light beam. A reference plane mirror 9 forms a reference wavefront. A collimating lens 10 condenses an incident light beam, and projects the condensed light beam onto an object 11 to be measured. The object 11 to be measured comprises a mirror, a lens or the like, whose three-dimensional shape, uniformness of material, and the like are to be detected. In the present embodiment, the object 11 to be measured comprises a concave mirror, and the apparatus measures the shape of the surface of the concave mirror. A polarizer 12 extracts specific polarization components from light waves having two orthogonal linearly polarized components, and makes the extracted components interfere with each other. A beam splitter 13 divides an incident light beam into two, i.e., reflected and transmitted, light beams. A pinhole plate 14 includes a plurality of pinholes each passing only a light beam incident upon a specific position. In the present embodiment, as shown in FIG. 3(A), three pinholes 14a, 14b and 14c are provided in the x and y directions (In FIG. 2, for the convenience of explanation, the pinholes are shown aligned on a line).

A first detection means 15 comprises three photodetectors 15a, 15b and 15c. The three photodetectors 15a, 15b and 15c are not disposed on a straight line (In FIG. 2, for the convenience of explanation, the detectors are shown aligned on a line), but are disposed, for example as shown in FIG. 3(B), separated with predetermined distances $L_x$ and $L_y$ in the x and y directions, respectively.

An image dissector camera 16 serves as a second detection means, and reads in real time an optical signal of a position whose address has been assigned by a computer 18. A phase detection means 17 comprises three phase meters 17a, 17b and 17c. Each of the phase meters 17a, 17b and 17c measures the phase difference between two signals input from each photodetector 15 or the image dissector camera 16. A buffer memory 20 temporarily stores signals relating to phase differences transmitted from the phase meters 17a, 17b and 17c.

The computer 18 performs arithmetic processing, as will be described later, using signals from the image dissector camera 16 and measured data from the buffer memory 20.

In the present embodiment, a light wave emitted from the laser 1 is reflected by a mirror M1, and is divided into a reflected light beam and a transmitted light beam by the beam splitter 2. The transmitted light beam (the first light wave) passing the Bragg cell 5a, a mirror M2 and the $\lambda/2$ plate 4, and the reflected light beam (the second light wave) passing the Bragg cell 5b and a mirror M3 are combined by the beam splitter 3.

At that time, the frequency of the first light wave passing through the Bragg cell 5a is shifted by a frequency f1, and the plane of the polarization of the first light wave passing through the $\lambda/2$ plate 4 is rotated by 90 degrees. The frequency of the second light wave passsing through the Bragg cell 5b is shifted by a frequency f2.

After being combined by the beam splitter 3, the diameter of the combined light beam is expanded by the beam expander 6, and is incident upon the polarizing beam splitter 7. The first light wave having the frequency f1 passes through the polarizing beam splitter 7, is made to be a circularly polarized light beam by the $\lambda/2$ plate 8b, and is incident upon the object 11 to be measured via the collimating lens 10. A wavefront to be measured reflected by the object 11 to be measured is returned to the original optical path. At that time, the direction of polarization (the plane of polarization) of the returned light wave after pass-

ing through the $\lambda/4$ plate 8b is displaced by 90 degrees from the direction of polarization when the light wave was first incident, since the returned light wave reflected by the object 11 to be measured has become a circularly polarized light beam rotated in the direction reverse to the direction when the light wave was first incident. Hence, the returned light wave is reflected by the polarizing beam splitter 7.

On the other hand, the second light wave having the frequency f2 is reflected by the polarizing beam splitter 7, and is made to be a circularly polarized light beam by the $\lambda/4$ plate 8a. A reference wave front reflected by the reference plane mirror 9 becomes a circularly polarized light rotating in the reverse direction, and is returned to the original optical path. The returned light wave passes through the $\lambda/4$ plate 8a, where the light wave becomes a linearly polarized light having a direction of polarization (a plane of polarization) displaced by 90 degrees from the direction of polarization when the light wave was first incident. Hence, the returned light wave passes through the polarizing beam splitter 7, and is combined (synthesized) with the above-described wavefront to be measured.

The combined two light waves, i.e., the wavefront to be measured and the reference wavefront are made to be coherent wavefronts by a polarizer 12 so as to interfere with each other. A light wave as a result of interference is detected as a heterodyne signal having a frequency shift difference of f1 - f2 by the photodetectors 15a, 15b and 15c, and the image dissector camera 16.

The phase distribution of the heterodyne signal f1 - f2 detected by the image dissector camera 16 in the present embodiment directly represents an error in the shape of the object 11 to be measured obtained from a spherical wave formed by the collimating lens 10, if it is assumed that no error components are present in other optical elements, for example, the reference plane mirror 9 has an ideal plane, and that a phase difference with a reference signal is 0 for each measured position in a state wherein no errors in shape are present in the object to be measured.

The phase difference $\phi_a$ between a reference signal R and a measuring signal S is detected by a phase meter 17a, where the reference signal R represents a heterodyne signal obtained, for example, from the photodetector 15a among heterodyne signals obtained from the photodetectors 15a, 15b and 15c, and the measuring signal S represents a signal corresponding to a specific point on the object to be measured from the image dissector camera 16.

The image dissector camera 16 two-dimensionally scans respective measured points by a command from the computer 18 to obtain the two-dimensional distribution of the phase difference $\phi_a$-(x,y) between the measuring signal S and the reference signal R at each measured point (x, y). A wavefront aberration due to the shape of the object 11 to be measured is thereby detected.

When the image dissector camera 16 two-dimensionally scans the surface to be measured of the object 11 to be measured, if, for example, the object 11 to be measured or the reference plane mirror 9 vibrates to provide an effect of tilt, a measurement error is produced.

In order to solve such a problem, in the present embodiment, the reference signal R from the photodetector 15a and the data of phase differences $\phi_{a,b}$ and $\phi_{a,c}$ which are phase differences between signals from the two spatially separated photodetectors 15a and 15b, and between signals from the two spatially separated photodetectors 15a and 15c, as shown in FIG. 3(B), are measured simultaneously with the measurement of the phase difference $\phi_a$(x,y) or with a period which is sufficiently shorter than the period of mechanical vibration from the start to the end of the two-dimensional scanning by the image dissector camera 16, and the measured data are stored in the buffer memory 20.

FIGS. 4(A) and 4(B) illustrate the results of measurement of the phase differences $\phi_{a,b}$ and $\phi_{a,c}$ with time as the abscissa. In FIGS. 4(A) and 4(B), reference numerals 31 and 32 represent values (phase differences) when no mechanical vibration is present, and reference numerals 31a and 32a represent values (phase differences) when mechanical vibration is present. These values are displaced with time.

By thus detecting the phase differences $\phi_{a,b}$ and $\phi_{a,c}$ having temporal displacements, the displacements of the object to be measured in the x and y directions due to vibration and the like, and the reference plane mirror due to tilt or the like are obtained. After the completion of the two-dimensional scanning by the image dissector camera 16, the computer 18 corrects the amount of vibration using information of wavefront aberration relating to the object 11 to be measured and information of the amount of vibration at that time, and obtains a correct wavefront aberration relating to the object 11 to be measured.

An explanation will now be provided of a method of correction at that time.

It is assumed that, as shown in FIG. 3(B), the photodetectors 15a and 15c are disposed separated with a distance $L_x$ in a direction parallel to the x axis on an image pickup surface 16a of the image dissector camera 16, and the photodetectors 15a and 15b are disposed separated with a distance $L_y$ in a direction parallel to the y axis.

The phase difference between a reference signal R obtained from the photodetector 15a, and a measuring signal S measured at an address (X,Y) on the image pickup surface 16a of the image dissector camera 16 corresponding to a point (x,y) of measurement is repesented by $\phi_a$(X,Y), and the phase differences between the reference signal R obtained from the photodetector 15a and measuring signals measured by the photodetectors 15b and 15c at the time of the measurement at the address (X,Y) are represented by $\phi_{a,b}$(X,Y) and $\phi_{a,c}$(X,Y).

If the interval between picture elements on the image pickup surface 16a of the image dissector camera 16 is represented by dw both in the x and y directions, the amount of phase correction C at the coordinate (X,Y) on the image pickup surface 16a is expressed by

$$C(X,Y) = \phi_{a,c}(X,Y)/L_Y \cdot Y \cdot dw - \phi_{a,c}(X,Y)/L_X \cdot X \cdot dw \quad (1).$$

Accordingly, a true wavefront aberration $\phi$(X,Y) according to the shape of the object 11 to be measured is expressed by

$$\phi(X,Y) = \phi_a(X,Y) - C(X,Y) \quad (2).$$

In the present embodiment, the calculation of such expressions (1) and (2) is performed for each point by the computer 18 to obtain the three-dimensional shape of the object 11 to be measured. At that time, a phase difference $\phi_a$(X,Y) corresponding to each point when no error is present in a subject to be measured (the shape in the present case) of the object to be measured has been stored in advance as a system error. The actually measured value of the phase difference $\phi_a$(X,Y) is substituted in expression (2) as data after subtracting the system error.

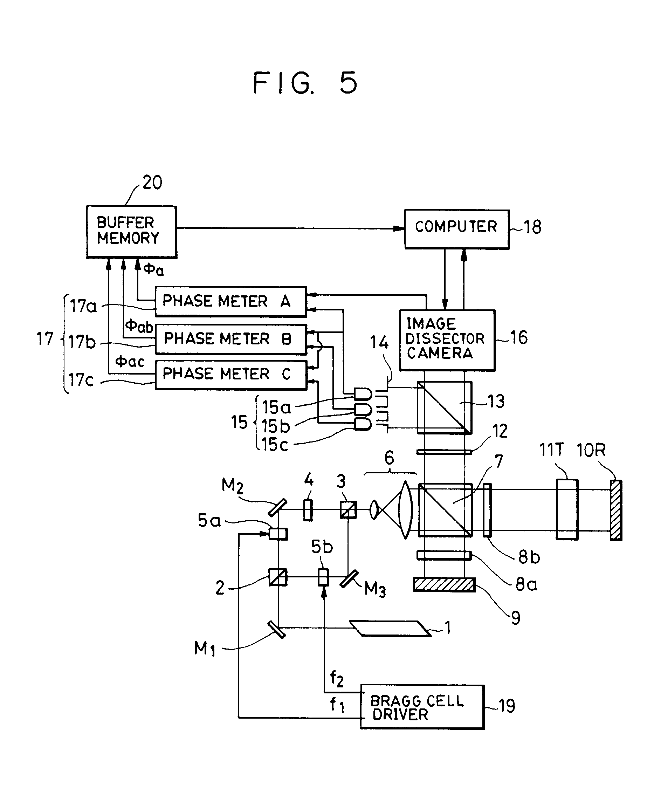

FIG. 5 is a schematic diagram of the principal part of an optical system according to a second embodiment of the present invention. Like components as those shown in the FIG. 1 embodiment are indicated by like numerals, and an explanation thereof will be omitted. In the present embodiment, an object 11T to be measured is a plate made of a transparent material. The present apparatus measures the uniformness of the material of the object to be measured according to the distribution of the refractive index. Reference numeral 10R represents a second reference plane mirror.

In the same manner as in the first embodiment, a first light wave having a frequency f1 passing through the beam splitter 7 is made to be a circularly polarized light beam by the λ/4 plate 8b, and is incident upon and transmitted through the object 11T to be measured. The light beam reflected by the second reference plane mirror 10R is again incident upon and transmitted through the object 11T to be measured to return to the original optical path. As in the foregoing embodiment, the light wave is then reflected by the polarizing beam splitter 7 to be combined with the reference wavefront, is made to be coherent light by the polarizer 12, and is detected by the photodetectors 15a - 15c and the image dissector camera 16.

If it is assumed that the reference plane mirror 9, the second reference plane mirror 10R and both surfaces of the object 11T to be measured have ideal surfaces, the phase distribution of the heterodyne signal f1 - f2 detected by the image dissector camera 16 in the present embodiment represents the distribution of the refractive index of the object 11T to be measured in the form of the distribution of optical path lengths at respective portions, that is, the distribution of optical path differences.

An explanation of the method of image processing will be omitted since it is the same as in the first embodiment. The wavefront aberration $\phi$-(X,Y) corresponding to each portion obtained by expression (2) may be converted into an error in the refractive index by a well-known method according to previously obtained data of the thickness of the object 11 to be measured. That is, in the present embodiment, the refractive index n(X,Y) at each portion may be converted using the following expression:

$$n(X,Y) = C \cdot \phi(X,Y)/4\pi fL,$$

where L is the thickness of the object 11 to be measured, f is the frequency of light for measurement, and C is the speed of light.

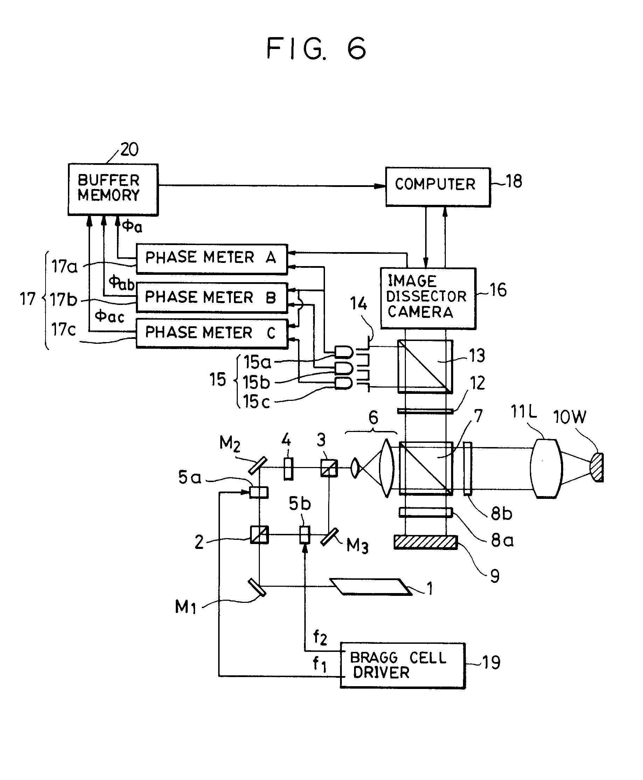

FIG. 6 represents a third embodiment of the present invention. In contrast to the second embodiment, an object 11L to be measured is a lens. A reference curved-surface mirror 10W has a reflecting surface having the same shape as the wavefront of the lens 11L when the lens 11L forms an ideal outgoing wavefront. Since other components are the same as in the second embodiment, an explanation thereof will be omitted.

If the reference plane mirror 9 is assumed to be an ideal plane, the distribution of the heterodyne signal f1 - f2 detected by the image dissector camera 16 represents twice an error of the deviation of the shape of the wavefront of the spherical wave generated by the lens 11L from the shape of the reflecting surface of the reference curved-surface mirror 10W. That is, in the present embodiment, an aberration of the wavefront generated by the lens 11L due to deviation from an ideal outgoing wavefront is measured.

Also in the above-described second and third embodiments, by performing the same signal pro-

cessing as in the first embodiment, measurement may be performed with removing the influence of the tilt, vibration and the like of the reference plane mirror 9, the second reference plane mirror 10R, the reference curved-surface mirror 10W and the like.

In the respective embodiments, the three photodetectors 15a, 15b and 15c may be disposed at any positions provided that they are not disposed on a straight line, as described above. That is, they may be disposed in any manner even if they are not orthogonal to one another, provided that they are disposed so as to be able to detect the effect of tilt of the object to be measured, the reference plane mirror and the like in the x and y directions due to vibration and the like.

If, for example, an average value is used utilizing signals obtained from a plurality of positions using at least three photodetectors, it is possible to perform detection having higher accuracy. Hence, this approach is preferable.

In the above-described embodiments, a photodetection means having the configuration of a plurality of two-dimensionally arranged elements within one component may also be used.

In the above-described embodiments, when a measurement-error component is produced only in one direction, the same effect as described above may be obtained, if two photodetectors are disposed separated with a predetermined interval in that direction.

An optical heterodyne interferometer generates first and second different frequency light beams. The first light beam after irradiating an object to be measured is combinde with the second light beam used as a reference to from a heterodyne signal. A first detector detects heterodyne signals from at least three points not in a straight line within a region of the object to be measured. A second detector detects heterodyne signals at respective points within the measuring region. Optical phase changes of the light beams due to the object to be measured are detected according to the signals obtained from the first and second detectors.

## Claims

1. A measuring apparatus, comprising:

   illumination means for irradiating coherent light onto a portion of an object to be measured;

   interference means for interfering light from respective points of the portion to be measured irradiated by said illumination means with a reference light;

   interference information detection means for sequentially detecting interference information of the light from said respective points;

tilt variation information detection means for detecting tilt variation information of said portion to be measured during detection by said interference information detection means; and

wavefront aberration information detection means for detecting information of a wavefront aberration in the light from said portion to be measured according to a result of detection by said interference information detection means and said tilt variation information detection means.

2. A measuring apparatus according to Claim 1, wherein said illumination means irradiates light onto a reflecting surface of a reflecting member as the object to be measured, and wherein said wavefront aberration information detection means detects shape information of said reflecting surface.

3. A measuring apparatus according to Claim 1, wherein said illumination means irradiates the light onto a transparent member as the object to be measured, and wherein said wavefront aberration information detection means detects optical path length difference information of respective portions due to a distribution of the refractive index of said transparent member.

4. A measuring apparatus according to Claim 1, wherein said illumination means irradiates the light onto a lens as the object to be measured, and wherein said wavefront aberration information detection means detects aberration information of said lens.

5. A measuring apparatus according to Claim 1, wherein said interference information detection means comprises an image dissector camera.

6. A measuring apparatus according to Claim 1, wherein said interference means interferes the light from the respective points of said portion to be measured with the reference light which has a frequency different from the frequency of said light.

7. A measuring apparatus according to Claim 6, wherein said tilt variation detection means comprises a plurality of photodetectors corresponding to different positions of said portion to be measured, and wherein said plurality of detectors detect part of the interference light from said interference means, and detects tilt variation information from a phase difference of the interference light detected by each of said plurality of detectors.

8. A measuring apparatus according to Claim 7, wherein said interference information detection means detects a phase difference between a phase of the interference light corresponding to said each point and a phase of the interference light detected by one of said plurality of photodetectors.

9. A method of measuring wavefront aberration information provided by an object to be measured when light is irradiated onto the object, said method comprising the steps of:
irradiating coherent light onto a portion of the object to be measured;
interfering light from respective points of said irradiated portion to be measured;
sequentially detecting interference information of light from said respective points;
detecting tilt variation information of said portion to be measured during said detection of interference information; and
detecting information of a wavefront aberration of the light from said portion to be measured according to results of the detection of said interference information and said tilt variation information.

10. A method according to Claim 9, wherein said wavefront aberration information detection detects shape information of a reflecting surface of a reflecting member as the object to be measured.

11. A method according to Claim 9, wherein said wavefront aberration information detection detects optical path length difference information of respective portions according to a distribution of the refractive index of a transparent member as the object to be measured.

12. A method according to Claim 9, wherein said wavefront aberration information detection detects aberration information of a lens as the object to be measured.

13. An apparatus for measuring wavefront aberration information from an object to be measured, comprising:
a light emitting unit for emitting a light having a first frequency for irradiating a portion of the object to be measured;
an interference optical system for forming interference light by interfering light from each point of the portion to be measured irradiated by said light having the first frequency with a reference light having a second frequency;
a scanning optical detector for sequentially detecting said interference light corresponding to each point;

a first phase meter for detecting a phase of interference light corresponding to each point detected by said scanning optical detector;

a plurality of photodetectors for continuously detecting interference light corresponding to a plurality of specific points of said portion to be measured during the detection by said scanning optical detector;

a second phase meter for detecting phases of interference light corresponding to said plurality of specific points detected by said plurality of photodetectors, respectively; and

an arithmetic unit for detecting wavefront aberration information provided by said portion to be measured according to a result of detection by said first and second phase meters.

14. An apparatus according to Claim 13, wherein said light emitting unit comprises a laser light source, a beam splitter for separating light from said laser light source, a first frequency shifter for providing a separated light beam with a first frequency, a second frequency shifter for providing another separated light beam with a second frequency, and a beam bender for combining the light beams having said first and second frequencies, and wherein said interference optical system comprises an interferometer for guiding the light beam having the first frequency to the portion to be measured, guiding the light beam having the second frequency to a reference member, and combining the light beam having the first frequency from the portion to be measured and the light beam having the second frequency from said reference member serving as said reference light to interfere said light beams.

# F I G. 1
## P R I O R  A R T

# FIG. 2

FIG. 3 (A)

14b

14a

14c

14

Y

X

FIG. 3 (B)

dw

0    X ADDRESS    Nx

Y ADDRESS

Ly

Nx

15b

15a

15c

Lx

Ny

IMAGE PICKUP SURFACE
OF IMAGE DISSECTOR CAMERA

LIGHT FOR MEASUREMENT

16a

Y

X

FIG. 4 (A)

$\phi_{AB}$

31a    31

t

FIG. 4 (B)

$\phi_{AC}$

32a    32

t

11

# FIG. 5

FIG. 6